(19) Europäisches Patentamt
European Patent Office
Office européen des brevets

(11) Veröffentlichungsnummer: **0 214 471**
**B1**

(12) **EUROPÄISCHE PATENTSCHRIFT**

(45) Veröffentlichungstag der Patentschrift: **28.11.90**

(51) Int. Cl.$^5$: **C 08 G 75/02**

(21) Anmeldenummer: **86110899.1**

(22) Anmeldetag: **06.08.86**

(54) **Verfahren zur Herstellung von hochmolekularen, gegebenenfalls verzweigten Polyarylensulfiden.**

(30) Priorität: **17.08.85 DE 3529498**

(43) Veröffentlichungstag der Anmeldung:
**18.03.87 Patentblatt 87/12**

(45) Bekanntmachung des Hinweises auf die Patenterteilung:
**28.11.90 Patentblatt 90/48**

(84) Benannte Vertragsstaaten:
**BE DE FR GB IT**

(56) Entgegenhaltungen:
**EP-A-0 053 344**
**EP-A-0 100 536**
**EP-A-0 164 638**
**EP-A-0 164 639**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Idel, Karsten, Dr.**
**Am Schwarzkamp 38**
**D-4150 Krefeld (DE)**
Erfinder: **Ebert, Wolfgang, Dr.**
**Dörperhofstrasse 31**
**D-4150 Krefeld (DE)**
Erfinder: **Bottenbruch, Ludwig, Dr.**
**Wöhlerstrasse 5**
**D-4150 Krefeld (DE)**
Erfinder: **Freitag, Dieter, Dr.**
**Hasenheide 10**
**D-4150 Krefeld (DE)**
Erfinder: **Meyer, Rolf-Volker, Dr.**
**Buchheimer Strasse 23**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 214 471 B1

Courier Press, Leamington Spa, England.

**Beschreibung**

Die Erfindung betrifft ein Verfahren zur Herstellung von hochmolekularen, gegebenenfalls verzweigten Polyarylensulfiden aus Alkalisulfiden, gegebenenfalls im Gemisch mit Alkalihydrogensulfiden und Dihalogenaromaten ein einem polaren Lösungsmittel, in Gegenwart von 0,1 bis 5,0 Mol-%, bevorzugt 0,25 bis 3,0 Mol-% einer aromatischen Monohalogenverbindung. Die so erhaltenen Polyarylensulfide haben definierte Schmelzviskositäten und zeichnen sich durch eine geringe Korrosion aus.

Polyarylensulfide und ihre Herstellung sind bekannt, s. beispielsweise US—PS—25 13 188, 31 17 620, 33 54 129.

Weiterhin ist aus der EP—A—53 344 bekannt, Polyphenylensulfide z.B. durch Zusatz von Monohalogenaromaten zu stabilisieren.

So ist z.B. bekannt, daß die Zugabe von anorganischen oder organischen Salzen zum Umsetzungsgemisch zur Erniedrigung des Schmelzflusses bzw. zur Erhöhrung der Schmelzviskosität der gewonnenen Polyphenylensulfide beiträgt. Erst bei ausreichend hoher Schmelzviskosität können Polyphenylensulfide thermoplastisch, z.b. zu Spritzgußteilen, Folien und Fasern verarbeitet werden. Ohne Zugabe der obengenannten Salze werden Polyphenylensulfide gewonnen, die den notwendigen geringen Schmelzfluß erst über eine separate und zusätzliche Nachkondensation bzw. Härtung (Curing) erhalten.

Es ist bekannt als Salze z.B. Alkalicarboxylate (DE—AS—24 53 749), Lithiumhalogenide oder Alkalicarboxylate (DE—OS—26 23 362), Lithiumchlorid oder Lithiumcarboxylat (DE—OS—26 23 363), Alkalicarbonate in Kombination mit Alkalicarboxylaten (US—PS—40 38 259), Lithiumacetat (DE—OS—26 23 333), Trialkaliphosphate (DE—OS—29 30 710), Trialkaliphosphonate (DE—OS—29 30 797), Alkalifluoride (DE—OS—30 19 732), Alkalisulfonate (US—PS—40 38 260), Lithiumcarbonat und Lithiumborat (US—PS—40 30 518) zuzusetzen.

Aus der DE—OS—31 20 538 ist bekannt, außerdem Polyarylensulfide mit hohen Schmelzviskositäten durch Zugabe von N,N-Dialkylcarbonsäureamiden zum Umsetzungsgemisch zu erhalten, sowie die Verwendung von polaren Lösungsmitteln für die Herstellung.

Es wurde nun gefunden, daß durch Zugabe bestimmter aromatischer Monohalogenverbindungen zum Reaktionsgemisch Polyarylensulfide erhalten wurden, die reproduzierbar einstellbare Schmelzviskositäten besitzen und sich durch geringe Korrosion bei der Verarbeitung auszeichnen.

Gegenstand der Erfindung ist daher ein Verfahren zur Herstellung von gegegebenenfalls verzweigten Polyarylensulfiden aus

a) 50—100 Mol-% Dihalogenaromaten der Formel

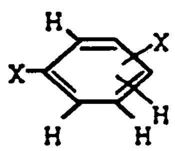

(I),

und 0—50 Mol-% Dihalogenaromaten der Formel

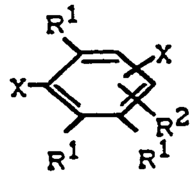

(II),

in denen

X für zueinander meta- oder para-ständiges Halogen wie Chlor oder Brom steht und

$R^1$ und $R^2$ gleich oder verschieden ist und Wasserstoff, $C_1$—$C_4$-Alkyl, $C_5$—$C_{10}$-Cycloalkyl, $C_6$—$C_{10}$-Aryl, $C_7$—$C_{10}$-Alkylaryl, $C_7$—$C_{14}$-Aralkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist und

b) 0—5 Mol-%, bevorzugt 0,1—2,5 Mol-%, bezogen auf die Summe der Dihalogenaromaten der Formel I und II, eines Tri- oder Tetrahalogenaromaten der Formel

$$ArX_n \qquad (III),$$

wobei

Ar ein aromatischer $C_6$—$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht und

c) 50 bis 100 Mol-% Alkalisulfid, bevorzugt Natrium- oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid, und 0 bis 50 Mol-% Alkalibisulfid, bevorzugt Natrium- und Kaliumhydrogensulfid, oder deren Mischung, wobei das molare Verhältnis von (a + b):c im Bereich von 0,75:1 bis 1,25:1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten, gegebenenfalls in Anwesenheit von N,N-Dialkylcarbonsäureamiden, Lactamen, Aminosäuren, Anhydriden und Estern von Carbonsäuren, dadurch gekennzeichnet, daß dem Reaktionsgemisch Monohalogenaromaten der Formel IV

$$W—A—R \qquad (IV),$$

worin

W für Halogen wie Cl, Br, J, Sulfonsäurerest wie Mesylat oder Tosylat, vorzugsweise Cl und Br, steht

A ein aromatischer oder heterocyclischer Rest, mit 6 bis 24 C-Atomen und 0 bis 3 Heteroatomen wie N, O, S ist, ausgewählt aus der Gruppe

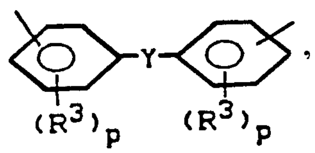, 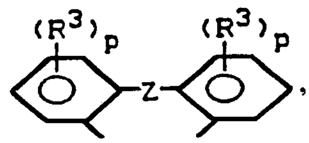,

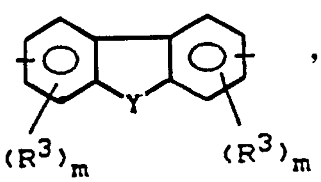, 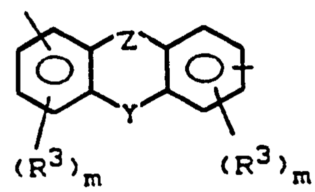

worin die Reste $R^3$ unabhängig voneinander $C_1$—$C_8$-Alkyl, $C_7$—$C_{19}$-Alkaryl/Aralkyl, $C_3$—$C_6$-Cycloalkyl sind,

Z für CO, —S—, —SO—, —$SO_2$—, O oder eine einfache Bindung steht,

Y für O, $NR^3$, (worin $R^3$ die oben angegebene Bedeutung hat), S, $SO_2$ oder CO steht,

k für die Zahl 0, 1, 2,

m für die Zahl 0, 1, 2, 3,

p für die Zahl 0, 1, 2, 3, 4 steht und

R die für $R^3$ angegebene Bedeutung hat,

in Mengen von 0,1 Mol-%—5 Mol-%, vorzugsweise 0,25 Mol-%—3,0 Mol-%, zugegeben werden.

Das erfindungsgemäße Verfahren kann in verschiedener Weise durchgeführt werden:

Die Alkalisulfide werden vorzugsweise in Form ihrer Hydrate und wäßrigen Mischungen oder wäßrigen Lösungen eingesetzt. Die Entwässerung kann partielle sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten eingesetzt werden, erfolgen. Für die Entwässerung können alle Reaktionspartner gemischt und die Entwässerung des Gesamtgemisches durchgeführt werden. Das Alkalisulfid kann auch separat mit einem Teil der Reaktionskomponenten oder alleine entwässert werden.

In einer Ausführungsform der Reaktion werden die Reaktionspartner zusammen mit dem Reaktionsbeschleuniger bzw. einem Gemisch von Reaktionsbeschleunigern in Anwesenheit des polaren Lösungsmittels kontinuierlich, unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so auch vermieden werden.

Wird völlig entwässert, so kann druckfrei bzw. druckarm bis zu ca. 3 bar Druck umgesetzt werden. Zur Erzielung von höheren Reaktionstemperaturen über den Siedepunkt des Lösungsmittel bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiten Spanne variiert werden. Sie kann 1 bis 48 Stunden, bevorzugt 1 bis 18 Stunden betragen. Die Reaktionstemperaturen liegen zwischen 150°C und 300°C, vorzugsweise zwischen 170°C und 280°C.

Die Zugabe der Monohalogenaromaten als Kettenabbrecher der Formel IV kann vor oder während der Reaktion erfolgen.

Dabei können auch Gemische der Monohalogenaromaten eingesetzt werden. Die Zugabe kann über Dosierung über einen gewissen Zeitraum der Reaktion, portionweise zu bestimmten Zeiten des Reaktionsablaufes oder durch direkte Zugabe der berechneten Gesamtmenge zu einem definierten Zeitpunkt der Reaktion erfolgen.

Die erfindungsgemäß hergestellten Polyarylensulfide zeichnen sich durch definierte Schmelzviskositäten aus, die innerhalb eines engen Bereichs reproduziert werden können. Das ist insofern von großer Bedeutung, als zur Verarbeitung der Polyarylensulfide Polymerschmelzen mit unterschiedlichem Fließverhalten eingestellt werden müssen, die dem jeweiligen Verwendungszweck angepaßt sein müssen.

So sind zur Herstellung von Folien und Fasern höhere Schmelzviskositäten als zur Einstellung von Glasfaser-bzw. Glasfaser/Mineral-verstärkten Spritzgußteilen notwendig.

Ein weiterer Vorteil der erfindungsgemäßen Polyarylensulfide ist die größere Stabilität bei thermischer Belastung. Nur so ist gewährleistet, daß kein weiterer Auf- oder Abbau bei der thermoplastischen Verarbeitung, der zur vollständigen Veränderung des Eigenschaftsbildes führen kann, eintritt, und Regenerat nach der Verarbeitung wieder neu eingesetzt werden kann.

Darüber hinaus ist die bei der thermoplastischen Verarbeitung oder bei Kontakt von PPS-Schmelzen mit metalloberflächen im allgemeinen auftretende Korrosion, die zu Verunreinigungen des PPS und zum Verschleiß von Verarbeitungsmaschinen führt, bei den erfindungsgemäßen Polyarylensulfiden erfreulicherweise auch bei hoher thermischer Belastung stark reduziert.

Die Aufarbeitung des Umsetzungsgemisches und die Isolierung der Polyarylensulfide können in bekannter Weise erfolgen.

Das Polyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die Alkalisulfide können z.B. auch aus $H_2S$ und den Alkalihydroxiden bzw. aus den Hydrogensulfiden und Alkalihydroxiden erhalten werden.

Je nach Anteil an Alkalihydrogensulfid im Alkalisulfid können auch zusätzlich bestimmte Anteile Alkalihydroxid zudosiert werden. Gegebenenfalls können auch anstelle der Alkalihydroxide solche Verbindungen zugegeben werden, die unter den Reaktionsbedingungen Alkalihydroxide abspalten bzw. bilden.

Erfindungsgemäß können meta- und para-Dihalogenaromaten der Formel (I) bzw. (II) eingesetzt werden. In diesem Fall kann das Verhältnis meta- zu para-Dihalogenaromaten bis zu 30:70 betragen.

Um thermoplastisch verarbeitbare Polyphenylensulfide zu erhalten, werden bevorzugt p-Dihalogenaromaten eingesetzt.

Sollen verzweigte Polyarylensulfide hergestellt werden, sollten mindestens 0,05 Mol-% eines Tri- oder Tetrahalogenaromaten der Formel (III) eingesetzt werden.

Beispiele für erfindungsgemäß einzusetzende Dihalogenaromaten der Formel (I) sind: p-Dichlorbenzol, p-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibromobenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-2,5-dichlorbenzol. Sie sind allein oder im Gemisch miteinander einsetzbar.

Beispiele für erfindungsgemäß einzusetzende Tri- bzw. Tetrahalogenaromaten der Formel (III) sind; 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2',4,4'-Tetrachlorbiphenyl, 1,3,5-Trichlortriazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3—11 C-Atomen, die gegebenenfalls Substituenten am Kohlenstoffgerüst tragen können, die unter Reaktionsbedingungen inert sind.

Beispielsweise finden als N-Alkyllactame Verwendung:

N-Methylcaprolactam, N-Ethylcaprolactam, N-isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Erfindungsgemäß einsetzbare Monohalogenaromaten bzw. Heterocyclen sind beispielsweise:

2-Chlordiphenylether, 4-Chlordiphenylether, 2-Bromdiphenylether, 4-Bromdiphenylether, 2-Chlordiphenylsulfid, 3-Chlordiphenylsulfid, 4-Chlordiphenylsulfid, 2-Bromdiphenylsulfid, 3-Bromdiphenylsulfid, 4-Bromdiphenylsulfid, 2-Chlordiphenylsulfoxid, 4-Chlordiphenylsulfoxid, 2-Bromdiphenylsulfoxid, 4-Bromdiphenylsulfoxid, 2-Chlordiphenylsulfon, 3-Chlordiphenylsulfon, 4-Chlordiphenylsulfon, 2-Bromdiphenylsulfon, 3-Bromdiphenylsulfon, 4-Bromdiphenylsulfon, (3-Chlorphenyl)phenylketon, (4-Chlorphenyl)phenylketon, (3-Bromphenyl)phenylketon, (4-Bromphenyl)phenylketon.

Vorzugsweise werden eingesetzt 3-Chlordiphenylsulfid, 3-Bromdiphenylsulfid, 4-Chlordiphenylsulfid, 4-Bromdiphenylsulfid, 3-Chlordiphenylsulfon, 3-Bromdiphenylsulfon, 4-Chlordiphenylsulfon, 4-Bromdiphenylsulfon, (3-Chlorphenyl)phenylketon, (3-Bromphenyl)phenylketon, (4-Chlorphenyl)phenylketon, (4-Bromphenyl)phenylketon.

Die Reaktion kann gegebenenfalls zusätzlich in Anwesenheit von üblichen Reaktionsbeschleunigern wie z.B.:

Alkalicarboxylaten (DE—AS—24 53 749), Lithiumhalogeniden oder Alkalicarboxylaten (DE—OS—26 23 362), Lithiumchlorid oder Lithiumcarboxylat (DE—OS—26 23 363), Alkalicarbonaten in Kombination mit Alkalicarboxylaten (US—PS—40 38 259), Lithiumacetat (DE—OS—26 23 333), Trialkaliphosphaten (DE—OS—29 30 710), Trialkaliphosphonaten (DE—OS—29 30 797), Alkalifluoriden (DE—OS— 30 19 732), Alkalisulfonaten (US—PS—40 38 260), Lithiumcarbonat und Lithiumborat (US—PS—40 10 518), Aminosäuren (DE—OS—3 428 984), definierten Mengen Lactam (DE—OS—34 32 985), Anhydriden und Estern von Carbonsäuren (DE—OS—34 32 986) und N,N-Dialkylcarbonsäureamiden durchgeführt werden.

Die erfindungsgemäßen Polyarylensulfide können mit anderen Polymeren, Pigmenten und Füllstoffen — beispielsweise Graphit, Metallpulver, Glaspulver, Quarzmehl, Glasfasern oder Kohlefasern — gemischt oder mit den für Polyarylensulfide üblichen Additiven, beispielsweise üblichen Stabilisatoren oder Entformungsmitteln, versetzt werden.

Im allgemeinen wird das Schmelzfließverhalten von Polyarylensulfiden nach ASTM 1238—70 bei 316°C unter Verwendung eines 5-kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität ®m der Polymerschmelze (in Pa.s) bei 306°C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^{-1}$ bis $17^{7}$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Firma Instron, Durchmesser als Kegels und der Platte 2 cm. Angegeben wird die Schmelzviskosität, die bei einer Schubspannung von $\tau = 10^2$ Pa gemessen wird.

Die erfindungsgemäßen Polyarylensulfide besitzen nach der Isolierung aus dem Reaktionsgemisch Schmelzviskositäten zwischen 1 und $5 \times 10^3$, vorzugsweise 5 bis $10^3$ Pa.s. Sie können in der üblichen Weise verarbeitet werden. Erhalten werden dabei Folien, Fasern und vorzugsweise Spritzgießmessen. Diese können Verwendung finden, z.B. als Automobilteile, Armaturen, Elektroteile, z.B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmessen für elektronische Bauteile etc.

Polyarylensulfide können über chromatografische Verfahren analysiert werden, um Aussagen über Molekulargewicht und Molekulargewichtsverteilung zu machen. Hierfür sind z.B. Hochdruckflüssigkeitschromatografie (HPLC) oder Gelpermeationschromatografie (GPC) geeignet.

Als stationäre Phase können übliche Trägermaterialien verwendet werden, z.B. Li-Chroprep®, Lobar®, Li-Chrosorb®, Li-Chrospher®, Perisorb®, Hibar®, Fractogel®, Ultrastyragel®, Microstyragel®, Zorbax®, Bondagel® und Shodex®.

Als Lösungsmittel und Laufmittel können übliche Lösungsmittel verwendet werden. Diese sollten das Polymere ausreichend lösen.

Z.B. sind 1-Chlornaphthalin, Diphenyl, N-Methylpyrrolidon, N-Cyclohexylpyrrolidon, N-Methylpiperidon, N-Methylcaprolactam, N-Methyllaurinlactam, Sulfolan, N,N'-Dimethylimidazolidinon, N,N'-Dimethylpiperazinon, Hexamethylphosphorsäuretriamid, 1-Methyl-1-oxo-phospholan und deren Mischungen geeignet.

Bei den chromotographischen Analysenmethoden können absolute oder relative Eichungen durchgeführt werden. Als Eichsubstanzen für relative Eichungen eignen sich beispielsweise übliche Polymere wie z.B. Polystyrol, Polyethylen, Polyethylenterephthalat, Polybutylenterephthalat, Polyester, wie rein aromatische Polyester, Polycarbonat, Polyamide, wie PA 6, PA 66, PA 11, Polysulfone oder Polyethersulfone.

Die Chromatographie zur analytischen Bestimmung der Molekulargewichte, bzw. Molekulargewichtsverteilung kann bei verschiedenen Drücken von 1 bis 10 bar angewendet werden.

Die chromatografische Bestimmung wird bei einer Temperatur von Raumtemperatur bis 250°C durchgeführt.

Weiterhin können zur Verbesserung der Meßgenauigkeit der zu analysierenden Probe Substanzen wie Alkalihalogenide, Erdalkalicarboxylate, Phosphonium- oder Ammoniumverbindungen zugesetzt werden.

Bei der Auswertung der so ermittelten Analysendaten können die gewichtsgemittelten Molekulargewichte $M_w$ angegeben werden. Diese betragen 15 000 bis 150 000, vorzugsweise 15 000 bis 100 000.

Beispiele

Beispiel 1

Dieses Beispiel beschreibt zum Vergleich die Herstellung von Polyphenylensulfid gemäß US—PS—33 54 129, wobei zur Erhöhung der Schmelzviskosität 1,2,4-Trichlorbenzol als Verzweiger zudosiert wird.

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202°C erwärmt. Dabei destillierten insgesamt 19 ml Wasser ab. Der Ansatz wurde anschließend auf ca. 160°C heruntergekühlt und 147 g p-Dichlorbenzol (= 1 Mol) und 1,81 g 1,2,4-Trichlorbenzol (1 Mol%, bzw. auf Mol p-Dichlorbenzol) in ca. 50 g N-Methyl-2-pyrrolidon hinzugefügt. Man erwärmt das Reaktionsgemisch unter dem Stickstoffvordruck von 2,5 bar in 30 min auf 245°C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen untworfen wird.

Man trocknet bei 80°C im Vakuum und erhält 100,3 g (93%) Poly-p-phenylensulfid mit einer Schmelzviskosität von 20 Pa.s (gemessen bei $10^2$ Pa und 306°C).

Beispiel 2

Zu 2100 g N-Methylcaprolactam und 940,8 g p-Dichlorbenzol wurden 756,75 g Natriumsulfid-Hydrat (ca. 60%ig)

135 g 2,5%ige Natronlauge und

108 g Caprolactam

bei einer Temperatur von 220°C zudosiert.

Die Zudosierrate richtet sich nach dem Umsatz und wird so eingestellt, daß die Temperatur von 220°C bei gleichzeitiger zusätzicher Beheizung des Reaktionsgefäßes eingehalten werden kann. Bei der Dosierung wird gleichzeitig das Wasser aus der Reaktion enfernt.

Nach der Dosierung hält man die Reaktion weitere 4 h auf Rückfluß und dosiert dann 24,3 g p-Chlordiphenylsulfon in 50 ml N-Methylcaprolactam hinzu. Nach weiteren 3 Stunden Reaktionszeit wird das PPS in Wasser ausgefällt, elektrolytfrei gewaschen und mit einem organischen Lösungsmittel kurz extrahiert. Das getgrocknete p-Polyphenylensulfid hat eine Schmelzviskosität von 45 Pa.s (gemessen bei $10^2$ Pa und 306°C).

Beispiel 3

Wie Beispiel 2, jedoch wird das p-Chlordiphenylsulfon bereits nach 2 Stunden 30 Min. zudosiert. Das erhaltene p-Polyphenylensulfid hat eine Schmelzviskosität von 15 Pa.s (gemesen bei $10^2$ Pa und 306°C).

Beispiel 4

Wie Beispiel 2, jedoch mit Methyloxophospholan als Lösungsmittel. Es wird ein p-Polyphenylensulfid mit einer Schmelzviskosität von 60 Pa.s (gemessen bei $10^2$ Pa und 306°C) erhalten.

Beispiel 5

Wie Beispiel 3, jedoch wurden 10,1 g p-Chlordiphenylether zugegeben. Es wird eine Schmelzviskosität von 250 Pa.s (gemessen bei $10^2$ Pa und 306°C) erhalten.

Beispiel 6

Der Versuch von Beispiel 2 wurde 5 mal wiederholt. Innerhalb kleiner Fehlerbreite wurde mit sehr guter Reproduzierbarkeit immer die gleiche Viskosität erhalten (Tab. 1):

TABELLE 1

| | |
|---|---|
| Muster 1 | $\eta_m$ = 51 Pa.s (bei $10^2$ Pa und 306°C) |
| Muster 2 | $\eta_m$ = 47 Pa.s |
| Muster 3 | $\eta_m$ = 46 Pa.s |
| Muster 4 | $\eta_m$ = 50 Pa.s |
| Muster 5 | $\eta_m$ = 46 Pa.s |

Beispiel 7

Wie Beispiel 2, jedoch werden statt der Zugabe in der Nachkondensationszeit, 32,4 g (2 Mol-%) 4-Chlordiphenylsulfon vorgelegt. Das nach der Aufarbeitung erhaltene Polyphenylensulfid hat eine Schmelzviskosität von $\eta_m$ = 13 Pa.s (bei $\tau = 10^2$ Pa 306°C.

Beispiel 8

Wie Beispiel 7, jedoch werden 24,3 g (1,5 Mol-%) 4-Chlordiphenylsulfon vorgelegt. Das so erhaltene Polyphenylensulfid hat eine Schmelzenviskosität von $\eta_m$ = 32 Pa.s (bei $\tau = 10^2$ Pa und 306°C).

Beispiel 9

Wie Beispiel 7, jedoch werden 16,2 g (1,0 Mol-%) 4-Chlordiphenylsulfon vorgelegt. Das isolierte Polyphenylensulfid hat eine Schmelzenviskosität von $\eta_m$ = 63 Pa.s (bei $\tau = 10^2$ Pa und 306°C) erreicht.

Beispiel 10

Beispiel 9 wurde wiederholt. Es wurde ein Polyphenylensulfid mit $\eta_m$ = 66 Pa.s (bei $\tau = 10^2$ Pa und 306°C) erhalten.

Beispiel 11

Wie Beispiel 7, jedoch werden 12,15 g (0,75 Mol-%) 4-Chlordiphenylsulfon vorgelegt. Damit erhält man ein Polyphenylensulfid mit einer Schmelzviskosität von $\eta_m$ = 80 Pa.s (bei $\tau = 10^2$ Pa und 306°C).

Beispiel 12

Wie Beispiel 7, jedoch werden 8,1 g (0,5 Mol-%) 4-Chlordiphenylsulfon vorgelegt. Das so erhaltene Polyphenylensulfid hat eine Schmelzviskosität von $\eta_m$ = 145 Pa.s (bei $\tau = 10^2$ Pa und 306°C).

Beispiel 13

Wie Beispiel 8, jedoch wurde statt N-Methylcaprolactam mit N-Butylcaprolactam als Lösungsmittel gearbeitet. Das Polyphenylensulfid hat eine Schmelzviskosität von $\eta_m$ = 34 Pa.s (bei $\tau = 10^2$ Pa und 306°C).

Korrosion

Die Korrosion wurde durch Titration saurer Ausgasungen der entsprechenden Polyphenylensulfidproben im Luftstrom bei 350°C in 1 h bestimmt.

$$\text{Der Korrosionsfaktor } f = \frac{\text{Korrosion des entsprechenden Beispiels}}{\text{Korrosion des Vergleichsbeispiels 1}}$$

TABELLE 2

| Beispiel | f |
|---|---|
| 2 | 0,89 |
| 3 | 0,92 |
| 4 | 0,90 |
| 5 | 0,85 |
| 7 | 0,92 |
| 8 | 0,90 |
| 9 | 0,85 |
| 11 | 0,92 |
| 12 | 0,91 |

**Patentansprüche**

1. Verfahren zur Herstellung von gegebenenfalls verzweigten Polyarylensulfiden aus
a) 50—100 Mol-% Dihalogenaromaten der Formel

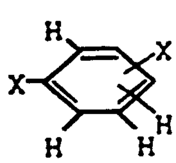

(I),

und 0—50 Mol-% Dihalogenaromaten der Formel

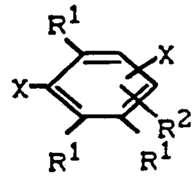

(II),

in denen

X für zueinander meta- oder para-ständiges Halogen wie Chlor oder Brom steht und

$R^1$ und $R^2$ gleich oder verschieden ist und Wasserstoff, $C_1$—$C_4$-Alkyl, $C_5$—$C_{10}$-Cycloalkyl, $C_6$—$C_{10}$-Aryl, $C_7$—$C_{10}$-Alkylaryl, $C_7$—$C_{14}$-Aralkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist und

b) 0—5 Mol-%, bezogen auf die Summe der Dihalogenaromaten der Formel I und II, eines Tri- oder Tetrahalogenaromaten der Formel

$$ArX_n \qquad (III),$$

wobei

Ar ein aromatischer $C_6$—$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht und

c) 50 bis 100 Mol-% Alkalisulfid, z.B. in Form ihrer Hydrate oder wäßrigen Mischungen, gegebenenfalls zusammen mit geringen Mengen Alkalihydroxiden wie Natrium- und Kaliumhydroxid, und 0 bis 50 Mol-% Alkalibisulfid, oder deren Mischung, wobei das molare Verhältnis von (a + b):c im Bereich von 0,75:1 bis 1,25:1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten, gegebenenfalls in Anwesenheit von N,N-Dialkylcarbonsäureamiden, Lactamen, Aminosäuren, Anhydriden und Estern von Carbonsäuren, dadurch gekennzeichnet, daß dem Reaktionsgemisch Monohalogenaromaten der Formel IV

$$W—A—R \qquad (IV),$$

worin

W für Halogen wie Cl, Br, J, Sulfonsäurerest wie Mesylat oder Tosylat, vorzugsweise Cl und Br, steht,

A ein aromatischer oder heterocyclischer Rest, mit 6 bis 24 C-Atomen und 0 bis 3 Heteroatomen wie N, O, S ist, ausgewählt aus der Gruppe

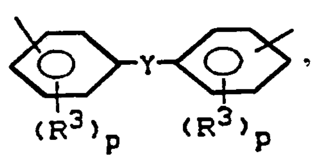
,
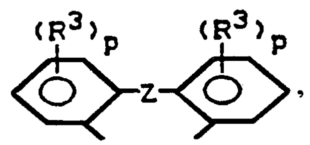
,

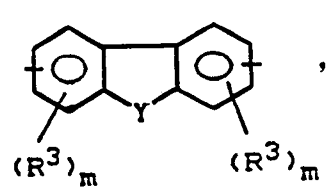
,
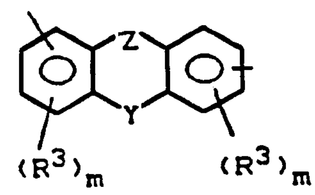

worin die Reste $R^3$ unabhängig voneinander $C_1$—$C_8$-Alkyl, $C_7$—$C_{19}$-Alkaryl/Aralkyl, $C_3$—$C_6$-Cycloalkyl sind,

Z für CO, —S—, —SO—, —$SO_2$—, O oder eine einfache Bindung steht,

Y für O, $NR^3$, (worin $R^3$ die oben angegebene Bedeutung hat), S, $SO_2$ oder CO steht,

k für die Zahl 0, 1, 2,

m für die Zahl 0, 1, 2, 3,

p für die Zahl 0, 1, 2, 3, 4 steht und

R die für $R^3$ angegebene Bedeutung hat,

in Mengen von 0,1 Mol-%—5 Mol-%, zugegeben werden.

2. Verfahren nach Anspruch 1, dadurch gekennzeichnet, daß die Reaktionspartner und das polare Lösungsmittel einzeln oder in Mischungen bzw. Lösungen bei Temperaturen ≥200°C unter gleichzeitiger Entwässerung zusammengeführt und zur Reaktion gebracht werden.

3. Verfahren nach Anspruch 1, dadurch gekennzeichnet, daß ein Gemisch von Alkalisulfiden und Alkalihydrogensulfiden gegebenenfalls wasserfrei eingesetzt wird.

4. Verfahren nach Anspruch 1, dadurch gekennzeichnet, daß die Reaktion in Abwesenheit von Wasser durchgeführt wird.

5. Verfahren nach Anspruch 1, dadurch gekennzeichnet, daß 0,25 bis 3,0 Mol-% Monohalogenaromaten der Formel IV eingesetzt werden.

6. Verfahren nach Anspruch 1, dadurch gekennzeichnet, daß der Monohalogenaromat Monochlordiphenylsulfon ist.

7. Verfahren nach Anspruch 1, dadurch gekennzeichnet, daß man N-Methyl-ε-caprolactam als polares Lösungsmittel einsetzt.

**Revendications**

1. Procédé pour la fabrication de poly(sulfures d'arylène) éventuellement ramifiés à partir de

a) 50—100 moles-% de composés aromatiques dihalogénés de formule

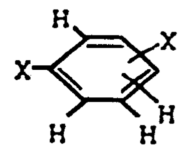

(I),

et 0—50 moles-% de composés aromatiques dihalogénés de formule

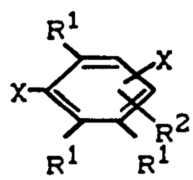

(II),

où

X représenté des atomes d'halogène tels que le chlore ou le brome se trouvant en position mutuelle méta ou para et

$R^1$ et $R^2$ sont identiques ou différents et peuvent être l'hydrogène, un groupe alkyle en $C_1$—$C_4$, cycloalkyle en $C_5$—$C_{10}$, aryle en $C_6$—$C_{10}$, alkylaryle en $C_7$—$C_{10}$, aralkyle en $C_7$—$C_{14}$, deux restes $R^1$ en position ortho mutuelle pouvant être reliés en un noyau aromatique ou hétérocyclique contenant jusqu'à trois hétéroatomes tels que N, O, S et un reste $R^1$ étant en tout cas différent de l'hydrogène et

b) 0—5 moles-%, par rapport à la somme des composés aromatiques dihalogénés de formules I et II, d'un composé aromatique tri- ou tétrahalogéné de formule

$$ArX_n \qquad (III),$$

dans laquelle

Ar est un reste aromatique en $C_6$—$C_{14}$ ou un reste hétérocyclique avec 5 à 14 atomes cycliques, jusqu'à 3 atomes C cycliques pouvant être remplacés par des hétéroatomes comme N, O, S,

X représente un halogène comme le chlore ou le brome et

n représente le nombre 3 ou 4 et

c) 50 à 100 moles-% de sulfure de métal alcalin, par exemple sous forme d'hydrates ou de mélanges aqueux, éventuellement ensemble avec de petites quantités d'hydroxydes de métaux alcalins comme l'hydroxyde de sodium et l'hydroxyde de potassium, et 0 à 50 moles-% de bisulfure de métal alcalin, ou un mélange de ces composés, le rapport molaire de (a + b):c pouvant se situer dans la plage de 0,75:1 à 1,25:1,

d) éventuellement en présence d'accélérateurs de réaction comme les carboxylates de métaux alcalins, les phosphates de métaux alcalins, les phosphonates de métaux alcalins, les fluorures de métaux alcalins, les sulfonates de métaux alcalins, éventuellement en présence de N,N-dialkylcarboxamides, de lactames, d'acides aminés, d'anhydrides et d'esters d'acides carboxyliques, caractérisé en ce qu'on ajoute au mélange réactionnel des composés aromatiques monohalogénés de formule IV

$$W—A—R \qquad (IV),$$

dans laquelle

W représente un halogène comme Cl, Br, I, un reste d'acide sulfonique comme un mésylate ou un tosylate, de préférence Cl et Br,

A un reste aromatique ou hétérocyclique avec 6 à 24 atomes de carbone et 0 à 3 hétéroatomes comme N, O, S, choisi dans le groupe

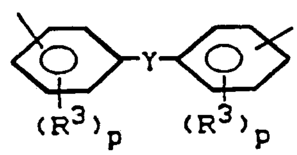
,
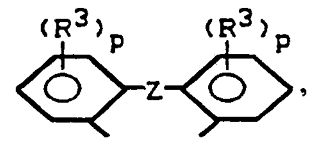
,

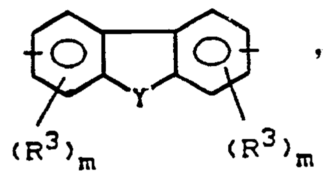
,
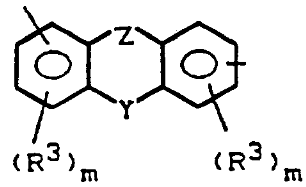

dans lequel les restes $R^3$ représentent indépendamment les uns des autres un groupe alkyle en $C_1$—$C_8$, alkaryle/aralkyle en $C_7$—$C_{19}$, cycloalkyle en $C_3$—$C_6$,

Z représente CO, —S—, —SO—, —$SO_2$, O ou une liaison simple,

Y représente O, $NR^3$ (où $R^3$ possède les significations décrites ci-dessus), S, $SO_2$ ou CO,

k représente le nombre 0, 1, 2,

m représente le nombre 0, 1, 2, 3,

p représente le nombre 0, 1, 2, 3, 4 et

R possède la signification décrite pour $R^3$,

en quantités de 0,1 mole-% à 5 moles-%, de préférence 0,25 mole-% à 3,0 moles-%.

2. Procédé selon la revendication 1, caractérisé en ce que les partenaires réactionnels et le solvant polaire sont introduits ensemble individuellement ou en mélanges ou solutions à des températures ≥ 200°C avec déshydratation simultanée et mis à réagir.

3. Procédé selon la revendication 1, caractérisé en ce qu'on utilise un mélange de sulfures de métaux alcalins et d'hydrogénosulfures de métaux alcalins éventuellement introduit sans eau.

4. Procédé selon la revendication 1, caractérisé en ce que la réaction est effectuée en l'absence d'eau.

5. Procédé selon la revendication 1, caractérisé en ce qu'on utilise 0,25 à 3,0 moles-% de composés aromatiques monohalogénés de formule IV.

6. Procédé selon la revendication 1, caractérisé en ce que le composé aromatique monohalogéné est de la monochlorodiphénylsulfone.

7. Procédé selon la revendication 1, caractérisé en ce qu'on utilise du N-méthyl-ε-caprolactame comme solvant polaire.

## Claims

1. A process for the production of optionally branched polyarylene sulfides from

a) 50 to 100 mol-% aromatic dihalogen compounds corresponding to the formula

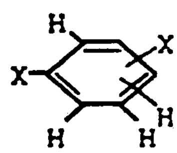
(I),

and 0 to 50 mol-% aromatic dihalogen compounds corresponding to the formula

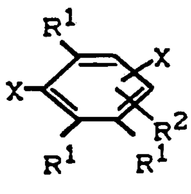
(II),

in which the

X's represent halogens, such as chlorine or bromine, in the meta- or para-position to one another and

$R^1$ and $R^2$ may be the same or different and represent hydrogen, $C_{1-4}$ alkyl, $C_{5-10}$ cycloalkyl, $C_{6-10}$ aryl,

$C_{7-10}$ alkylaryl, $C_{7-14}$ aralkyl; two substituents $R^1$ in the ortho position to one another may be attached to form an aromatic or heterocyclic ring containing up to three hetero atoms, such as N, O, S and one substituent $R^1$ is always different from hydrogen and

b) 0 to 5 mol-%, based on the sum of the aromatic dihalogen compounds corresponding to formula I and II, of an aromatic tri- or tetrahalogen compound corresponding to the formula

$$ArX_n \qquad (III)$$

in which

Ar is an aromatic $C_{6-14}$ radical or a heterocyclic radical containing 5 to 14 ring atoms, up to 3 ring C atoms being replaceable by hetero atoms, such as N, O, S,

X represents halogen, such as chlorine or bromine, and

n is the number 3 or 4 and

c) 50 to 100 mol-% alkali sulfide, for example in the form of their hydrates or aqueous mixtures, optionally together with small quantities of alkali hydroxides, such as sodium and potassium hydroxide, and 0 to 50 mol-% alkali bisulfide, or mixtures thereof, the molar ratio of (a + b):c being from 0.75:1 to 1.25:1,

d) optionally in the presence of reaction accelerators, such as alkali carboxylates, alkali phosphates, alkali phosphonates, alkali fluorides, alkali alkyl sulfonates, optionally in the presence of N,N-dialkyl carboxylic acid amides, lactams, amino acids, anhydrides and esters of carboxylic acids,

characterized in that aromatic monohalogen compounds corresponding to the formula

$$W—A—R \qquad (IV)$$

in which

W is halogen, such as Cl, Br, I, a sulfonic acid group, such as mesylate or tosylate, preferably Cl and Br,

A is an aromatic or heterocyclic radical containing 6 to 24 C atoms and 0 to 3 hetero atoms selected from the group

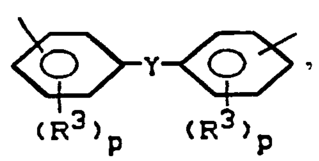 , 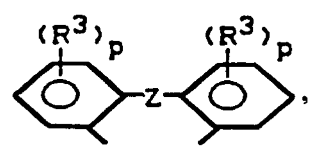 ,

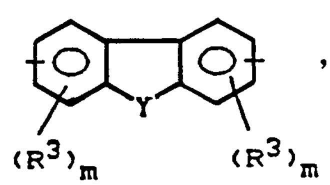 , 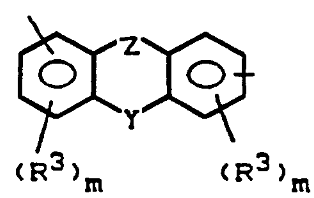

where the substituents $R^3$ independently of one another are $C_{1-8}$ alkyl, $C_{7-19}$ alkaryl/aralkyl, $C_{3-6}$ cycloalkyl,

Z is CO, —S—, —SO—, —$SO_2$—, O or a single bond

Y is O, $NR^3$ (where $R^3$ is as defined above), S, $SO_2$ or CO,

k is the number 0, 1, 2,

m is the number 0, 1, 2, 3,

p is the number 0, 1, 2, 3, 4 and

R has the meanings defined for $R^3$,

are added to the reaction mixture in quantities of 0.1 to 5 mol-%.

2. A process as claimed in claim 1, characterized in that the reactants and the polar solvent are combined and reacted individually or in the form of mixtures or solutions at temperatures of ≥200°C with simultaneous removal of water.

3. A process as claimed in claim 1, characterized in that an optionally anhydrous mixture of alkali sulfides and alkali hydrogen sulfides is used.

4. A process as claimed in claim 1, characterized in that the reaction is carried out in the absence of water.

5. A process as claimed in claim 1, characterized in that a quantity of 0.25 to 3.0 mol-% of the aromatic monohalogen compounds corresponding to formula IV is used.

6. A process as claimed in claim 1, characterized in that the aromatic monohalogen compound is monochlorodiphenyl sulfone.

7. A process as claimed in claim 1, characterized in that N-methyl-ε-caprolactam is used as the polar solvent.